# EUROPÄISCHE PATENTSCHRIFT

(11) **EP 3 132 156 B1**
(45) Veröffentlichungstag und Bekanntmachung des Hinweises auf die Patenterteilung: **06.06.2018**
(21) Anmeldenummer: 15716997.0
(22) Anmeldetag: 14.04.2015
(51) Int. Cl.: B60G 15/06, F16F 9/38, F16F 1/12, F16F 13/00

(54) **ANORDNUNG ZUR AUFNAHME EINER TRAGFEDER EINES FEDERBEINS UND FEDERTELLER HIERZU**
ASSEMBLY FOR RECEIVING A SUSPENSION SPRING OF A SUSPENSION STRUT, AND ASSOCIATED SPRING SEAT
ENSEMBLE DESTINÉ À LOGER UN RESSORT DE SUSPENSION D'UNE JAMBE DE SUSPENSION ET COUPELLE DE RESSORT ASSOCIÉE

(30) Priorität: 15.04.2014 DE 102014105361
(43) Veröffentlichungstag der Anmeldung: 22.02.2017
(73) Patentinhaber: ThyssenKrupp Bilstein GmbH, 58256 Ennepetal (DE); thyssenkrupp AG, 45143 Essen (DE)
(72) Erfinder: LINDEMANN, Jürgen, 52499 Baesweiler (DE); MEURER, Frank, 50181 Bedburg (DE); DODT, Michael, 58300 Wetter (DE); MAGES, Stefan, 50354 Hürth (DE)
(74) Vertreter: thyssenkrupp Intellectual Property GmbH
(86) Internationale Anmeldenummer: PCT/EP2015/058040
(87) Internationale Veröffentlichungsnummer: WO 2015/158698

(56) Entgegenhaltungen:
- DE-A1- 10 122 796
- DE-A1- 19 641 728
- DE-A1-102007 018 161
- DE-A1-102010 004 204
- DE-A1-102010 018 044
- DE-U1- 9 109 020

## Beschreibung

Die vorliegende Erfindung betrifft eine Anordnung zur Aufnahme einer Tragfeder eines Federbeins für ein Kraftfahrzeug, mit einem Federteller, der auf einem Dämpferrohr eines Schwingungsdämpfers des Federbeins angeordnet ist, sodass eine Endseite der Tragfeder am Federteller abgestützt ist.

Bekannt sind Federbeine mit einem Schwingungsdämpfer und mit einer Tragfeder, bei denen die Tragfeder mit dem in Bezug auf die Einbaulage des Federbeins unteren Seite am Dämpferrohr des Schwingungsdämpfers abgestützt ist. Zur Abstützung der Endseite der Tragfeder kann ein Federteller dienen, der fest auf dem Dämpferrohr des Schwingungsdämpfers aufgenommen ist. Die gegenüberliegende Endseite der Tragfeder, die abhängig von der Einbaulage des Federbeins zum Fahrzeugrahmen hinweisen kann, kann an einem Dämpferlager oder Kopflager aufgenommen sein. Über das Dämpferlager oder Kopflager kann schließlich das Federbein am Fahrzeugrahmen befestigt werden. Mit der unteren Endseite des Dämpferrohres des Schwingungsdämpfers wird dabei der Achsschenkel zur Bildung der Achse und zur Aufnahme des Rades des Fahrzeuges befestigt, wobei ein derartiger Aufbau eines Federbeins unter Berücksichtigung weiterer Merkmale als sogenanntes MacPherson Federbein bezeichnet wird.

### STAND DER TECHNIK

Aus der DE 10 2010 018 044 A1 ist eine Anordnung zur Aufnahme einer Tragfeder eines Federbeins für ein Kraftfahrzeug bekannt, und die Anordnung umfasst als zentrales Element einen Federteller, der auf einem Dämpferrohr eines Schwingungsdämpfers des Federbeins angeordnet ist, sodass eine Endseite der Tragfeder, in den Abbildungen gezeigt durch die untere Endseite, am Federbein abgestützt ist. Die obere Endseite der Tragfeder ist in einem Dämpferlager aufgenommen. Das Dämpferrohr ist Bestandteil eines Schwingungsdämpfers und aus dem Dämpferrohr erstreckt sich eine Kolbenstange heraus, die über ein Schutzelement geschützt ist. Das Schutzelement ist als Faltenbalg ausgeführt und an einer Kappe aufgenommen, die endseitig am Dämpferrohr angeordnet ist. Die Schutzkappe dient dazu, das Eintreten von Verunreinigungen und Nässe in den Bereich zu verhindern, in dem die Kolbenstange aus dem Dämpferrohr herausgeführt wird. Das Abschlusselement zur Herausführung der Kolbenstange aus dem Dämpferrohr wird als Verschlusspaket bezeichnet und weist Abstreifer sowie Dichtungen und Führungselemente für die Kolbenstange auf. Verunreinigungen würden sich ohne das Schutzelement auf der Kolbenstange absetzen und das Verschlusspaket beschädigen, was zu einem Ausfall des Schwingungsdämpfers führen kann.

Die Aufnahme des Schutzelementes an der Kappe und damit endseitig am Dämpferrohr des Schwingungsdämpfers erfordert eine spezielle Ausführung der Kappe in einer topfförmigen Gestalt, wobei sich Nachteile in der Montage der Kappe ergeben, die am Dämpferrohr angeordnet werden muss. Zugleich muss das untere Ende des Schutzelementes an der Kappe angeordnet werden, wofür die Kappe einen Außenmantelbereich aufweist, an dem eine Federzunge, ein Spreizelement, eine Anschlagfläche und weitere Merkmale erforderlich sind. Der Aufbau der Kappe wird dadurch schnell kompliziert und ist nur über einen erhöhten Aufwand herstellbar. Der aufwendige Aufbau der Kappe ist lediglich der Aufnahme des Schutzelementes geschuldet, ohne die die Kappe wesentlich einfacher ausgestaltet werden könnte. Grundsätzlich dient die Kappe dem Zweck, einen Anschlag für einen Anschlagpuffer zu bilden, der einen Endanschlag beim Einfahren der Kolbenstange in das Dämpferrohr dämpft. DE 196 41 728 A1 zeigt sowohl eine Anordnung zur Aufnahme einer Tragfeder eines Federbeins für ein Kraftfahrzeug gemäß des Oberbegriffs des Anspruchs 1 als auch ein Federteller zur Anordnung auf einem Dämpferrohr eines Schwingungsdämpfers eines Federbeins für ein Kraftfahrzeug gemäß des Oberbegriffs des Anspruchs 6.

### OFFENBARUNG DER ERFINDUNG

Aufgabe der Erfindung ist die verbesserte Anbindung eines Schutzelementes zum Schutz einer Kolbenstange eines Schwingungsdämpfers als Teil eines Federbeins für ein Kraftfahrzeug.

Die Aufgabe wird gelöst durch eine Anordnung zur Aufnahme einer Tragfeder mit den Merkmalen des Anspruchs 1 sowie mit einem Federteller zur Anordnung auf einem Dämpferrohr eines Schwingungsdämpfers mit den Merkmalen des Anspruchs 10. Vorteilhafte Weiterbildungen der Erfindung sind in den jeweils abhängigen Ansprüchen angegeben.

Die Erfindung schließt die technische Lehre ein, dass das Schutzelement zum Schutz einer Kolbenstange des Schwingungsdämpfers an den Federteller angebunden ist.

Durch die erfindungsgemäße Anbindung des Schutzelementes an den Federteller kann eine aufwendige Ausgestaltung einer Kappe auf der Endseite des Dämpferrohres entfallen, und das Schutzelement, beispielsweise gebildet durch einen Faltenbalg, kann die gleiche Schutzwirkung erzielen, um das Eindringen von Verunreinigungen in den Führungsbereich der Kolbenstange des Schwingungsdämpfers zu verhindern. Insbesondere kann das Schutzelement bereits am Federteller angeordnet werden und gemeinsam mit dem Schutzelement kann der Federteller auf dem Dämpferrohr des Schwingungsdämpfers aufgeschoben werden. So wird auch eine aufwendige Montage einer endseitig am Dämpferrohr angeordneten Kappe gemeinsam mit der Anordnung des Schutzelementes vermieden, wodurch der Montageprozess des Federbeins erleichtert wird. Des Weiteren wird vermieden, dass zwischen der topfartigen Kappe und der Endseite des Dämpferrohres Verunreinigungen eintreten können, die ebenfalls das Verschlusspaket zur Herausführung der Kolbenstange aus dem Dämpferrohr beschädigen können. Das Verschlusspaket mit der Kappe zum Anschlag des Anschlagpuffers befindet sich nämlich bei Anbindung des Schutzelementes am Federteller bereits im durch das Schutzelement geschützten Bereich, sodass die Kappe endseitig am Dämpferrohr keinen Verunreinigungen und keiner Feuchtigkeit oder Nässe ausgesetzt ist.

Gemäß einer vorteilhaften Weiterführung des erfindungsgemäß ausgebildeten Federtellers kann dieser Führungsmittel zur Führung des Schutzelementes aufweisen, durch die ein Kontakt des Schutzelementes mit dem Dämpferrohr vermieden wird. Dadurch kommt es nicht zu einer Scheuerwirkung zwischen der Innenseite des Schutzelementes und der Außenseite des Dämpferrohres.

Mit weiterem Vorteil kann der Federteller mit den Führungsmitteln einteilig ausgebildet sein, und um den Federteller möglichst leicht auszuführen, kann dieser aus einem Kunststoffmaterial ausgebildet sein. Beispielsweise kann der Federteller aus einem Polyamid hergestellt sein, sodass der Federteller eine hohe Festigkeit bietet und durch ein Kunststoff-Spritzgussverfahren auf einfache Weise herstellbar ist.

Die Führungsmittel können durch an den Federteller angeformte Laschen oder Zungen ausgebildet sein, und der Federteller kann beispielsweise eine ringförmige Grundstruktur aufweisen, wobei die Laschen oder Zungen sich an einer Stirnseite der ringförmigen Grundstruktur axial von dieser abstreckend angeformt sein können. Anstatt der Zungen oder Laschen kann das Führungsmittel aus als ein dünnwandiger Rohrabschnitt ausgebildet sein, der umfänglich geschlossen ausgebildet ist und der sich an der Stirnseite der ringförmigen Grundstruktur axial von dieser abstreckend anschließt.

Die Zungen, die auch als Laschen bezeichnet werden können, können an der Stirnseite der ringförmigen Grundstruktur eine kronenartige Gestalt bilden, und die durch die Zungen gebildete Krone kann die Außenseite des Dämpferrohres in regelmäßigen Abständen mit den Laschen umschließen. Dadurch wird ein Kontakt des Schutzelementes mit der Außenseite des Dämpferrohres vermieden, sodass das Schutzelement in einer Bewegung gegen das Dämpferrohr keinen Verschleiß erfährt. Mit besonderem Vorteil können die Zungen so ausgebildet sein, dass diese bei Anordnung des Federtellers auf dem Dämpferrohr mit ihrer Innenseite am Dämpferrohr anliegen oder an dessen Außenseite wenigstens angrenzen und auf der Außenseite können die Zungen eine Führung für das Schutzelement bilden. Insbesondere können Führungsleisten auf der Außenseite der Zungen angebracht sein, die sich längs erstrecken und damit eine Führung in der Bewegungsrichtung des Schutzelementes über dem Dämpferrohr bei einer Einfederung des Federbeins bilden.

Die Zungen zur Führung des Schutzelementes können insbesondere mit den Führungsleisten einen Führungskörper bilden, durch den das Schutzelement, insbesondere gebildet durch einen Faltenbalg, von seiner Innenseite berührungslos über die volle Länge des Dämpferrohres geführt werden können. Die Zungen am ringförmigen Grundkörper des Federtellers können mit einer derartigen Länge ausgeformt sein, dass diese bis an das Ende des Dämpferrohres heranreichen, sodass über der gesamten Länge des Dämpferrohres, das durch das Schutzelement hindurchläuft, ein Kontakt des Schutzelementes mit dem Dämpferrohr vermieden ist. Beispielsweise können die Enden der Führungsmittel bis kurz vor oder bis an die Anschlagkappe angrenzen, die endseitig am Dämpferrohr angebracht ist und den Anschlag für den Anschlagpuffer bildet.

Der Federteller kann innenseitig und insbesondere in der ringförmigen Grundstruktur einen Stützabsatz aufweisen, der komplementär zu einem im Dämpferrohr ausgebildeten Rohrabsatz ausgebildet ist. Wird der Federteller über das Dämpferrohr geschoben, so gelangt der Stützabsatz in formschlüssigen Eingriff mit dem Rohrabsatz, sodass der Federteller in Axialrichtung des Dämpferrohres mit der Abstützkraft der Tragfeder beaufschlagt werden kann. Die Tragfeder weist dabei einen Durchmesser auf, der größer ist als der Außendurchmesser des Schutzelementes, sodass das Schutzelement innenseitig durch die Tragfeder hindurch verlaufen kann. Die Abstützung der Tragfeder erfolgt dabei über eine entsprechende Federaufnahme, und innenseitig der Federaufnahme können sich die Führungsmittel, also die Laschen oder Zungen, in axialer Richtung der Grundstruktur anschließen. Die Aufnahme der Tragfeder an der ringförmigen Grundstruktur bleibt dabei unbeeinflusst von der Ausgestaltung der Führungsmittel und der Aufnahme des Schutzelementes am Federteller.

Die Aufgabe der Erfindung wird ferner gelöst durch einen Federteller zur Anordnung auf einem Dämpferrohr eines Schwingungsdämpfers eines Federbeins für ein Kraftfahrzeug, sodass eine Endseite einer Tragfeder des Federbeins am Federteller abstützbar ist. Erfindungsgemäß ist dabei der Federteller zur Anbindung eines Schutzelementes zum Schutz einer Kolbenstange des Schwingungsdämpfers ausgebildet. Der Federteller kann eine ringförmige Grundstruktur aufweisen, und an die ringförmige Grundstruktur können Führungsmittel angeordnet sein, wobei durch die Führungsmittel ein Kontakt des Schutzelementes mit dem Dämpferrohr vermieden werden kann.

Die Führungsmittel des Federtellers können Laschen oder Zungen bilden, die an einer Stirnseite der ringförmigen Grundstruktur sich axial von dieser abstreckend angeformt sind. Dabei können die Laschen oder die Zungen so ausgebildet sein, dass diese bei Anordnung des Federtellers auf dem Dämpferrohr mit ihrer Innenseite am Dämpferrohr anliegen oder an dessen Außenseite zumindest angrenzen und auf der Außenseite kann eine Führung für das Schutzelement gebildet werden. Insbesondere kann die Außenseite Führungsleisten aufweisen, durch die das Schutzelement führbar ist. Die Führungsmittel, also die Laschen oder Zungen, können einteilig mit der ringförmigen Grundstruktur ausgeführt sein, und der Federteller mit der ringförmigen Grundstruktur und den Führungsmitteln kann beispielsweise durch ein Kunststoff-Spritzgussverfahren hergestellt werden. Dadurch wird der Vorteil erreicht, dass der Federteller ein besonders geringes Gewicht aufweist, und das Schutzelement kann durch einen Faltenbalg gebildet sein, sodass der Federteller eine integrierte Faltenbalgführung durch die Führungsmittel aufweist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Ansicht eines Federbeins mit einer erfindungsgemäßen Anordnung zur Aufnahme einer Tragfeder und eines Schutzelementes,
- Figur 2: das Federbein gemäß Figur 1 in einer nicht geschnittenen Ansicht und
- Figur 3: eine perspektivische Ansicht eines Federtellers zur Anordnung auf einem Dämpferrohr eines Schwingungsdämpfers gemäß der Figuren 1 und 2.

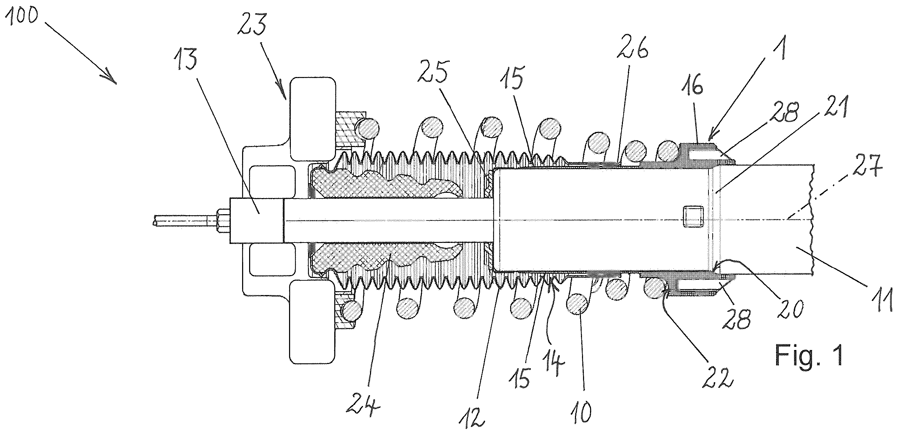

Figur 1 zeigt in einer quergeschnittenen Ansicht ein Federbein 100 mit einem Schwingungsdämpfer, der mit einem Dämpferrohr 11 und mit einer Kolbenstange 13 gezeigt ist. Weiterhin umfasst das Federbein 100 eine Tragfeder 10, die mit einer Endseite über einen Federteller 1 am Dämpferrohr 11 des Schwingungsdämpfers abgestützt ist und mit einer weiteren Endseite ist die Tragfeder 10 an einem Dämpferlager 23 aufgenommen. Über das Dämpferlager 23 kann das Federbein 100 beispielsweise an den Rahmen eines Kraftfahrzeuges angeschlossen werden.

Zum Schutz der Kolbenstange 13 ist ein als Faltenbalg ausgeführtes Schutzelement 12 vorgesehen, und das Schutzelement 12 umschließt die Kolbenstange 13 und dichtet den Bereich der Kolbenstange 13 derart ab, dass keine Verunreinigungen und keine Feuchtigkeit an die Kolbenstange 13 gelangen kann.

Im Innenbereich des Schutzelementes 12 ist ein Anschlagpuffer 24 angeordnet und am Dämpferlager 23 befestigt, und wenn die Kolbenstange 13 in das Dämpferrohr 11 eingefahren wird, also wenn eine Einfederung des Federbeins 100 erfolgt, kann der Anschlagpuffer 24 gegen eine Kappe 25 anschlagen, die endseitig am Dämpferrohr 11 angebracht ist.

Der Federteller 1 ist erfindungsgemäß zur Anbindung einer Endseite des Schutzelementes 12 ausgebildet, und mit der Endseite ist das Schutzelement 12 über eine Verbindungsstelle 26 mit dem Federteller 1 verbunden. Der Federteller 1 weist eine ringförmige Grundstruktur 16 auf, und der Federteller 1 weist Führungsmittel 14 auf, die beispielhaft als Zungen 15 ausgeführt sind, und die Zungen 15 sind an einer Stirnseite der ringförmigen Grundstruktur 16 sich axial von dieser abstreckend angeformt.

Die Zungen 15 sind so ausgebildet, dass diese bei einer Anordnung des Federtellers 1 außenseitig auf dem Dämpferrohr 11 anliegen. Dadurch wird ein Kontakt der Innenseite des Schutzelementes 12 mit der Außenseite des Dämpferrohres 11 vermieden, und die Zungen 15 dienen als Führungsmittel 14, durch die das Schutzelement 12 außenseitig um das Dämpferrohr 11 geführt wird. Zur Führung des Schutzelementes 12 befindet sich folglich die Verbindungsstelle 26 zur Anbindung des Schutzelementes 12 an den Federteller 1 in Längsrichtung 27 gesehen zwischen den Führungsmitteln 14 und der ringförmigen Grundstruktur 16.

Die Tragfeder 10 stützt sich unter Aufbringung einer Axialkraft in der Längsrichtung 27 über eine Federaufnahme 22 am Federteller 1 ab, sodass der Federteller 1 in Längsrichtung 27 mit einer Federkraft beaufschlagt ist. Zur Abstützung des Federtellers 1 am Dämpferrohr 11 weist der Federteller 1 einen Stützabsatz 20 auf, der komplementär zu einem Rohrabsatz 21 ausgebildet ist, der im Dämpferrohr 11 eingebracht ist. Die Federaufnahme 22 zur Aufnahme der Tragfeder 10 am Federteller 1 ist als Schulter an der ringförmigen Grundstruktur 16 des Federtellers 1 ausgebildet, und die ringförmige Grundstruktur 16 weist Hohlkammern 28 auf, sodass der Federteller 1 unter Beibehaltung einer großen Steifigkeit, insbesondere zur Aussteifung der Federaufnahme 22, ein geringes Gewicht aufweist, insbesondere indem der Federteller 1 zusätzlich aus einem Kunststoffmaterial ausgebildet wird.

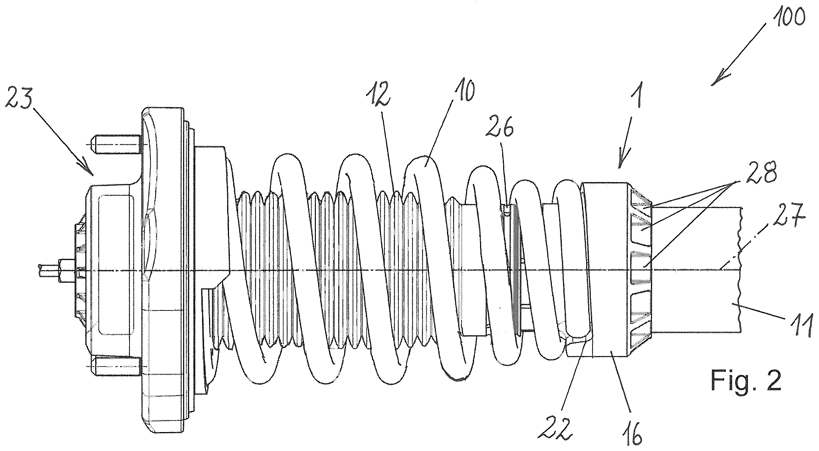

Figur 2 zeigt das Federbein 100 gemäß Figur 1 in einer nicht geschnitten Ansicht, das sich in Längsrichtung 27 erstreckt, und die Längsrichtung 27 bildet zugleich die Längsrichtung des Dämpferrohres 11 eines Schwingungsdämpfers, der Bestandteil des Federbeins 100 ist. Über der nicht sichtbaren Kolbenstange des Schwingungsdämpfers ist das Schutzelement 12 in Form eines Faltenbalges angeordnet, und zwischen dem Dämpferlager 23 und einem Federteller 1 ist eine Tragfeder 10 angeordnet, die das Schutzelement 12 umschließt. Der Federteller 1 ist zur Aufnahme des Schutzelementes 12 ausgebildet und eine Verbindungsstelle 26 bindet die untere Seite des Schutzelementes 12 an den Federteller 1 an.

Der Federteller 1 weist eine ringförmige Grundstruktur 16 auf, und die Grundstruktur 16 besitzt eine Federaufnahme 22, in der die Tragfeder 10 endseitig einsitzt. Die Verbindungsstelle 26 zur Anbindung des Schutzelementes 12 befindet sich dabei innenseitig der Tragfeder 10 und liegt damit in Längsrichtung 27 gesehen bereits in einer dem Dämpferlager 23 zugewandten Position bezogen auf die Grundstruktur 16 des Federtellers 1.

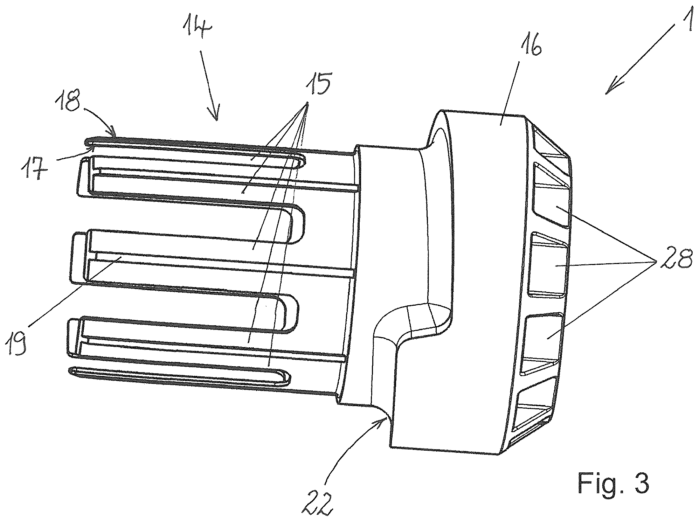

Die ringförmige Grundstruktur 16 weist Hohlkammern 28 zur Gewichtsreduktion des Federtellers 1 auf, der aus einem Kunststoffmaterial ausgebildet ist. Eine perspektivische Ansicht des Federtellers 1 zeigt Figur 3.

Figur 3 zeigt den Federteller 1 zur Anordnung auf dem Dämpferrohr eines Schwingungsdämpfers, um zur Bildung eines Federbeins eine Tragfeder am Dämpferrohr abzustützen. Hierzu weist der Federteller 1 eine ringförmige Grundstruktur 16 mit einer Federaufnahme 23 auf, und die ringförmige Grundstruktur 16 weist zur Verringerung des Gewichtes und zur gleichzeitigen Aufrechterhaltung einer hohen Steifigkeit und zur Unterstützung der Federaufnahme 22 Hohlkammern 28 auf.

An die ringförmige Grundstruktur 16 des Federtellers 1 schließen sich Führungsmittel 14 in Form von Zungen 15 an. Wird der Federteller 1 auf dem Dämpferrohr des Schwingungsdämpfers aufgebracht, so liegen die Innenseiten 17 der Zungen 15 an der Außenseite des Dämpferrohres an, und über die Außenseite 18 kann das Schutzelement zum Schutz der Kolbenstange des Schwingungsdämpfers geführt werden. Zur verbesserten Führung weisen die Außenseiten 18 der Zungen 15 Führungsleisten 19 auf.

Die Führungsmittel 14 sind an einer Stirnseite der ringförmigen Grundstruktur 16 sich axial von dieser abstreckend angeformt, wobei die Stirnseite mit den Führungsmitteln 14 der Stirnseite gegenüberliegend ist, die die Hohlkammern 28 zur Aussteifung des Grundkörpers 16 aufweist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Federbein

- 1: Federteller
- 10: Tragfeder
- 11: Dämpferrohr
- 12: Schutzelement
- 13: Kolbenstange
- 14: Führungsmittel
- 15: Zunge
- 16: ringförmige Grundstruktur
- 17: Innenseite
- 18: Außenseite
- 19: Führungsleiste
- 20: Stützabsatz
- 21: Rohrabsatz
- 22: Federaufnahme
- 23: Dämpferlager
- 24: Anschlagpuffer
- 25: Kappe
- 26: Verbindungsstelle
- 27: Längsrichtung
- 28: Hohlkammer

## Patentansprüche

1. Anordnung zur Aufnahme einer Tragfeder (10) eines Federbeins (100) für ein Kraftfahrzeug, mit einem Federteller (1), der auf einem Dämpferrohr (11) eines Schwingungsdämpfers des Federbeins (100) angeordnet ist, sodass eine Endseite der Tragfeder (10) am Federteller (1) abgestützt ist, wobei
ein Schutzelement (12) zum Schutz einer Kolbenstange (13) des Schwingungsdämpfers an den Federteller (1) angebunden ist, und wobei der Federteller (1) Führungsmittel (14) zur Führung des Schutzelementes (12) aufweist, durch die ein Kontakt des Schutzelementes (12) mit dem Dämpferrohr (11) vermieden wird,
**dadurch gekennzeichnet, dass** der Federteller (1) aus einem Kunststoffmaterial ausgebildet ist und wobei die Führungsmittel (14) durch an einer ringförmigen Grundstruktur (16) des Federtellers (1) angeformte Zungen (15) ausgebildet sind, die mit ihrer Innenseite (17) am Dämpferrohr (11) anliegen und auf der Außenseite (18) eine Führung für das Schutzelement (12) bilden.

2. Anordnung nach Anspruch 1, **dadurch gekennzeichnet, dass** der Federteller (1) mit den Führungsmitteln (14) einteilig ausgebildet ist.

3. Anordnung nach einem der Ansprüche 1 oder 2, **dadurch gekennzeichnet, dass** die Laschen oder Zungen (15) an einer Stirnseite der ringförmigen Grundstruktur (16) sich axial von dieser abstreckend angeformt sind.

4. Anordnung nach einem der Ansprüche 1 bis 3, **dadurch gekennzeichnet, dass** die Außenseite (18) Führungsleisten (19) aufweist, durch die das Schutzelement (12) führbar ist.

5. Anordnung nach einem der vorgenannten Ansprüche, **dadurch gekennzeichnet, dass** der Federteller (1) innenseitig und insbesondere in der ringförmigen Grundstruktur (16) einen Stützabsatz (20) aufweist, der komplementär zu einem im Dämpferrohr (11) ausgebildeten Rohrabsatz (21) ausgebildet ist.

6. Federteller (1) zur Anordnung auf einem Dämpferrohr (11) eines Schwingungsdämpfers eines Federbeins (100) für ein Kraftfahrzeug, sodass eine Endseite einer Tragfeder (10) des Federbeins (100) am Federteller (1) abstützbar ist, wobei
der Federteller (1) zur Anbindung eines Schutzelementes (12) zum Schutz einer Kolbenstange (13) des Schwingungsdämpfers ausgebildet ist, und wobei der Federteller (1) Führungsmittel (14) zur Führung des Schutzelementes (12) aufweist, durch die ein Kontakt des Schutzelementes (12) mit dem Dämpferrohr (11) vermeidbar ist,
**dadurch gekennzeichnet, dass** der Federteller (1) aus einem Kunststoffmaterial ausgebildet ist und wobei die Führungsmittel (14) durch an einer ringförmigen Grundstruktur (16) des Federtellers (1) angeformte Zungen (15) ausgebildet sind, die mit ihrer Innenseite (17) am Dämpferrohr (11) anlegbar sind und durch die auf der Außenseite (18) eine Führung für das Schutzelement (12) bildbar ist, sodass durch die Führungsmittel (14) ein Kontakt des Schutzelementes (12) mit dem Dämpferrohr (11) vermieden wird.

7. Federteller (1) nach Anspruch 6, **dadurch gekennzeichnet, dass** die Laschen oder Zungen (15) an einer Stirnseite der ringförmigen Grundstruktur (16) sich axial von dieser abstreckend angeformt sind.

8. Federteller (1) nach einem der Ansprüche 6 oder 7, **dadurch gekennzeichnet, dass** die Außenseite (18) Führungsleisten (19) aufweist, durch die das Schutzelement (12) führbar ist.

## Claims

1. Arrangement for the mounting of a suspension spring (10) of a spring strut (100) for a motor vehicle, having a spring plate (1) which is arranged on a damper tube (11) of a vibration damper of the spring strut (100), such that an end side of the suspension spring (10) is supported on the spring plate (1), wherein
a protective element (12) for protecting a piston rod (13) of the vibration damper is attached to the spring plate (1), and wherein the spring plate (1) comprises guide means (14) for guiding the protective element (12), by way of which guide means contact between the protective element (12) and the damper tube (11) is prevented,
**characterized in that** the spring plate (1) is formed from a plastics material, and wherein the guide means (14) are formed by tongues (15) that are integrally formed on a ring-shaped main structure (16) of the spring plate (1), which tongues lie by way of their inner side (17) against the damper tube (11) and, on the outer side (18), form a guide for the protective element (12).

2. Arrangement according to Claim 1, **characterized in that** the spring plate (1) is formed in one piece with the guide means (14).

3. Arrangement according to either of Claims 1 and 2, **characterized in that** the lugs or tongues (15) are integrally formed on a face side of the ring-shaped main structure (16) so as to extend axially from said face side.

4. Arrangement according to one of Claims 1 to 3, **characterized in that** the outer side (18) comprises guide strips (19) by way of which the protective element (12) can be guided.

5. Arrangement according to one of the preceding claims, **characterized in that** the spring plate (1) comprises, on the inner side and in particular in the ring-shaped main structure (16), a supporting shoulder (20) which is of complementary form with respect to a tube shoulder (21) formed in the damper tube (11).

6. Spring plate (1) for arrangement on a damper tube (11) of a vibration damper of a spring strut (100) for a motor vehicle such that an end side of a suspension spring (10) of the spring strut (100) can be supported on the spring plate (1), wherein
the spring plate (1) is designed for the attachment of a protective element (12) for protecting a piston rod (13) of the vibration damper, and wherein the spring plate (1) comprises guide means (14) for guiding the protective element (12), by way of which guide means contact between the protective element (12) and the damper tube (11) can be prevented,
**characterized in that** the spring plate (1) is formed from a plastics material, and wherein the guide means (14) are formed by tongues (15) that are integrally formed on a ring-shaped main structure (16) of the spring plate (1), which tongues can be caused to lie by way of their inner side (17) against the damper tube (11) and by way of which tongues, on the outer side (18), a guide for the protective element (12) can be formed such that contact between the protective element (12) and the damper tube (11) is prevented by the guide means (14).

7. Spring plate (1) according to Claim 6, **characterized in that** the lugs or tongues (15) are integrally formed on a face side of the ring-shaped main structure (16) so as to extend axially from said face side.

8. Spring plate (1) according to either of Claims 6 and 7, **characterized in that** the outer side (18) comprises guide strips (19) by way of which the protective element (12) can be guided.

## Revendications

1. Ensemble destiné à loger un ressort de suspension (10) d'une jambe de suspension (100) pour un véhicule automobile, avec une coupelle de ressort (1), qui est disposée sur un tube d'amortisseur (11) d'un amortisseur d'oscillations de la jambe de suspension (100), de telle manière qu'un côté d'extrémité du ressort de suspension (10) soit appuyé sur la coupelle de ressort (1),
dans lequel un élément de protection (12) destiné à protéger une tige de piston (13) de l'amortisseur d'oscillations est reliée à la coupelle de ressort (1), et dans lequel la coupelle de ressort (1) présente des moyens de guidage (14) pour le guidage de l'élément de protection (12), par lesquels un contact de l'élément de protection (12) avec le tube d'amortisseur (11) est évité,
**caractérisé en ce que** la coupelle de ressort (1) est formée en une matière plastique et dans lequel les moyens de guidage (14) sont formés par des languettes (15) façonnées sur une structure de base annulaire (16) de la coupelle de ressort (1), qui s'appliquent par leur côté intérieur (17) sur le tube d'amortisseur (11) et qui forment sur le côté extérieur (18) un guidage pour l'élément de protection (12).

2. Ensemble selon la revendication 1, **caractérisé en ce que** la coupelle de ressort (1) est formée d'une seule pièce avec les moyens de guidage (14).

3. Ensemble selon une des revendications 1 ou 2, **caractérisé en ce que** les pattes ou languettes (15) sont façonnées sur un côté frontal de la structure de base annulaire (16) en s'étendant axialement à partir de celle-ci.

4. Ensemble selon l'une quelconque des revendications 1 à 3, **caractérisé en ce que** le côté extérieur (18) présente des nervures de guidage (19), par lesquelles l'élément de protection (12) peut être guidé.

5. Ensemble selon l'une quelconque des revendications précédentes, **caractérisé en ce que** la coupelle de ressort (1) présente intérieurement et en particulier dans la structure de base annulaire (16) un épaulement d'appui (20), qui présente une forme complémentaire à un épaulement de tube (21) formé dans le tube d'amortisseur (11) .

6. Coupelle de ressort (1) destinée à être agencée sur un tube d'amortisseur (11) d'un amortisseur d'oscillations d'une jambe de suspension (100) pour un véhicule automobile, de telle manière qu'un côté d'extrémité d'un ressort de suspension (10) de la jambe de suspension (100) puisse s'appuyer sur la coupelle de ressort (1),
dans laquelle la coupelle de ressort (1) est configurée en vue de la liaison d'un élément de protection (12) destiné à protéger une tige de piston (13) de l'amortisseur d'oscillations, et dans laquelle la coupelle de ressort (1) présente des moyens de guidage (14) pour le guidage de l'élément de protection (12), par lesquels un contact de l'élément de protection (12) avec le tube d'amortisseur (11) peut être évité, **caractérisée en ce que** la coupelle de ressort (1) est formée en une matière plastique et dans laquelle les moyens de guidage (14) sont formés par des languettes (15) façonnées sur une structure de base annulaire (16) de la coupelle de ressort (1), qui peuvent s'appliquer par leur côté intérieur (17) sur le tube d'amortisseur (11) et par lesquelles un guidage pour l'élément de protection (12) peut être formé sur le côté extérieur (18), de telle manière qu'un contact de l'élément de protection (12) avec le tube d'amortisseur (11) soit évité par les moyens de guidage (14).

7. Coupelle de ressort (1) selon la revendication 6, **caractérisée en ce que** les pattes ou languettes (15) sont formées sur un côté frontal de la structure de base annulaire (16) en s'étendant axialement à partir de celle-ci.

8. Coupelle de ressort (1) selon une des revendications 6 ou 7, **caractérisée en ce que** le côté extérieur (18) présente des nervures de guidage (19), par lesquelles l'élément de protection (12) peut être guidé.
